# EUROPEAN PATENT SPECIFICATION

(11) **EP 0 357 848 B1**
(45) Date of publication and mention of the grant of the patent: **03.08.1994**
(21) Application number: 88308217.4
(22) Date of filing: 05.09.1988
(51) Int. Cl.: G02C 7/02

(54) **Low vision eye glasses**
Brille für Schwachsichtige
Lunettes pour améliorer la vue

(43) Date of publication of application: 14.03.1990
(73) Proprietor: Parker, William Seal, Orlando Florida 32803 (US)
(72) Inventor: Parker, William Seal, Orlando Florida 32803 (US)
(74) Representative: Price, Paul Anthony King

(56) References cited:
- WO-A-83/03481
- DE-A- 212 572
- DE-A- 227 921
- US-A- 2 133 585
- US-A- 2 474 837
- US-A- 3 027 803
- US-A- 3 379 487
- US-A- 4 155 626
- US-A- 4 555 164
- US-A- 4 581 031

## Description

This invention relates to improved eye glasses for use by people with macular (retinal) degeneration, optic nerve damage or similar low vision problems.

Various types of apparatus have been devised for people with vision problems. The most common of such apparatus are eye glasses for focusing light rays of an object being viewed onto the macular retinal membrane on the rear of the eyeball. Inadequate focusing is not uncommon and in general is caused by the improper focusing by the cornea and lens of the eyeball. When the cornea and lens do not function to properly bend or refract the incoming, image-bearing light rays, such light rays are not properly focused upon the macular retinal membrane and, as a result, the optic nerves cannot convey the proper information to the brain to effect proper vision. Many such problems are caused by non-spherical eyeballs. Mechanical lenses can normally correct this type of vision problem. Such mechanical lenses may take the form of contact lenses, eye glasses or the like and have been in common usage for many years.

When, however, faulty vision is caused either by the degeneration of the whole or part of the macular retinal membrane on the back or interior face of the eyeball, or by the deterioration of the optic nerve which would normally carry the images from the macular retinal membrane to the brain, standard lenses are generally insufficient to restore proper vision to the patient so afflicted.

Various commercial devices for overcoming low vision problems have received limited commercial acceptance. One of these devices is the Finebloom System. The Finebloom System is constructed of tube-type devices consisting of mirrors that attach to a conventional pair of eye glasses. This apparatus allows a patient using such system to focus on objects at one particular distance. The mirrors of the tubes concentrate the focused light to allow the degenerated macular retinal membrane, or degenerated part thereof, or the deteriorated optic nerve to function again to thereby restore some vision. Different tubes must be utilized for focusing at different distances. Additionally, such a system restricts the user to properly pinpoint or tunnel vision.

Another low vision aid is the Opticon System. This system consists of diverging contact lenses of a negative power used in optical cooperation with additional conventional converging lenses of positive power. The positive lenses must be moved toward or away from the contact lenses and eyes of the user to focus in a manner similar to a telescope. Patients utilizing such a system have a wider field of vision than they would experience with the Finebloom System, but magnification becomes a problem. Vertex distance, or distance from the contact lens of negative power to the front of the forward lens of positive power, creates a telescopic image much larger than normal size. This results in a depth perception problem for the user. Objects being viewed thus appear much closer than they really are. Further, as a practical matter, a great percentage of users of systems of this type are older and encounter problems applying and removing their contact lenses.

Various prior art disclosures describe lens arrangements in combinations which have limited structural similarities to the lens arrangement of the present invention. The original telescope by Galileo, for example, utilized negative power lens close to the eye of the user in optical combination with a positive power lens supported by a tube at fixed distance from the negative lens. Most telescopes now provide for relative displacement between lenses to enable focusing at different distances. Furthermore, telescopes are designed for magnifying rather than for achieving the effective one-to-one focusing which is the objective for normal eye glass use.

Other lens arrangements which utilize combined lenses of positive and/or negative characteristics are found in U.S. Patent Numbers 2,474,837 to Glancy and 3,511,558 to Uberhagen. These disclosures are directed to apparatus for use as magnifiers as in telescopes or cameras, a totally different function than the present invention which seeks to retain a one-to-one imaging with increased illumination over a range of distances for correcting low vision problems. Even though structural similarities may exist between the present invention and these prior art devices, their structural dissimilarities preclude their use for the purposes of the present invention.

Additionally, other prior art disclosures which describe lens arrangements for eye glasses can be found in U.S. Patent Numbers 968,693 to Rohr; 2,092,789 to Tillyer; 3,702,218 to Manhire; and 3,877,978 to Tolar. In all of these prior art disclosures, the lens assemblies are directed to combinations of lenses of varying shapes and powers to correct the problems a patient may have in focusing light rays onto the macular retinal membrane as caused by an improperly functioning cornea and lens rather than focusing at a particular selected area of the retina. None of the prior art arrangements of lenses provides for light concentrating capability to help patients who have low vision problems as caused by macular degeneration, optic nerve damage or the like. In most cases, these prior art patents describe lens arrangements which combine their positive and/or negative lenses together into a single lens. They therefore function as a single lens solely for the purpose of improving the focusing capabilities of the patient. Further, as discussed above, even though structural similarities may exist between the present invention and these prior art devices, their structural dissimilarities preclude their use for the purposes of the present invention.

According to a first aspect of the present invention, there is provided a method of fabricating eye glasses for focusing and concentrating light viewed from an object source onto an optically responsive portion of a partially degenerated macular retinal membrane disposed along the inner surface of an eye, the eye glasses including a positive power lens, and a negative power lens having an optical center and a prism portion, the method comprising the steps of: forming the positive lens; forming the negative lens, including predeterminately locating the optical center of the negative lens therein and integrally providing the prism portion generally in circumferential relation about the negative lens for passing ambient light entering the negative lens toward the retinal membrane; assembling the positive and negative lenses in a frame in predetermined positions with respect to each other, so that, in use, the negative lens is positioned between the positive lens and the eye; and disposing the optical center in a preselected position during the assembling step, thereby to control image direction for focusing an image on the optically responsive portion of the retinal membrane when converging light passes through the negative lens from the object source.

According to a second aspect of the present invention, there are provided eye glasses for enhancing visual acuity of a person suffering from vision deterioration due to loss of light response in portions of the person's retina, comprising: an outer positive power lens for converging light received from an object, said outer lens being supported by a frame; an inner negative power lens spaced apart from said outer lens and supported by said frame so that, in use, said inner lens is positioned between said outer lens and the person's retina and cooperatively functions with said outer lens to direct the light from an object onto an optically responsive portion of the person's retina; and a prism ring circumscribing said inner lens and oriented to re-direct ambient light onto the person's retina.

According to a third aspect of the present invention, there is provided a pair of spectacles for focusing and concentrating light received from an object onto an optically responsive portion of a partially degenerated macular retinal membrane which is positioned along the inner surface of an eye, said spectacles comprising: an outer positive power lens for converging light received from the object, said outer lens being supported by a frame; an inner negative power lens spaced apart from said outer lens and supported by said frame so that, in use, said inner lens is positioned between said outer lens and the eye and controls image direction to focus an image upon the optically responsive portion of the retinal membrane, said inner lens having an outer concave surface facing said outer lens and an inner concave surface facing away from said outer lens, the diameter of the inner concave surface being smaller than the diameter of the outer concave surface; and a circular ring prism circumscribing said inner lens and oriented to refract light entering said inner lens toward an optical center of said inner lens.

The present invention eliminates the need for a patient to endure tunnel or pinpoint vision and eliminates the need for a patient to wear a bulky apparatus or one which would require constant readjustment for focusing.

For a more complete understanding of the present invention, reference should be had to the following non-limiting description taken in conjunction with the accompanying drawings in which:
FIG. 1 is a top view of a lens frame assembly for use in eye glasses according to this invention;
FIG. 2 is a rear view of the lens frame assembly of FIG. 1;
FIG. 3 is a bottom view of the lens frame assembly of FIG. 1 showing the hinging action of the assembly;
FIG. 4 is a cross-sectional view of one form of a lens assembly for the lens frame assembly of FIG. 1; and
FIG. 5 is a planar view of a convex lens forming a part of the lens assembly of FIG. 5.

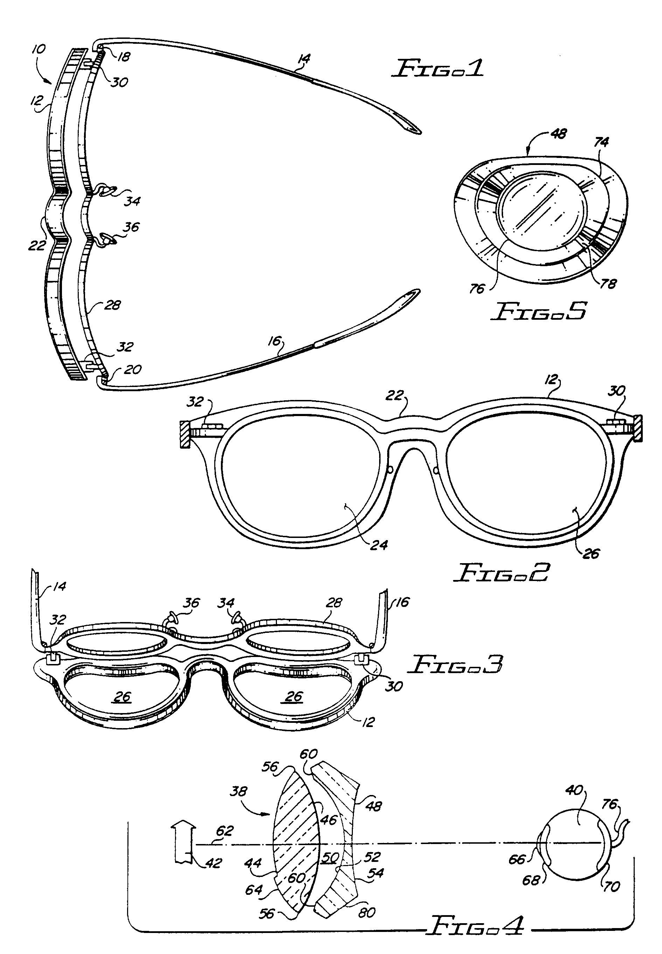

FIGS. 1, 2 and 3 illustrate one form of eye glass frame assembly 10 for improving the vision of patients suffering from low vision problems such as macular degeneration, optic nerve damage or the like. The frame assembly includes a standard lens support frame or rim 12 for ridigly holding a magnification lens in proper orientation with respect to an eye of a user of such eye glasses. The rim 12 is preferably plastic so as to have low weight while providing massive support. The interior surface of rim 12 is provided with a groove in a manner well known in the art formed as an inset ledge adapted to receive the edges of a lens for maintaining it in a desired position. The frame assembly also includes elongated side stems 14 and 16 terminating in downturned arms for positioning behind the ears of a user for securing the glasses on the head of the user so as to hold the frames and, consequently, the lens assemblies, in proper orientation with respect to the eyes of a user. Hinges 18 and 20 are preferably provided at the forward ends of the stems adjacent the rims to permit the folding of the parts of the eye glasses into a compact arrangement when not in use. A bridge 22 couples two lens openings 24 and 26 across the nose of a user. In such manner, the optical axes of a lens held in the frame assembly 10 normally coincide with the optical axes of the eyeballs of a user so that the objects being viewed are usually aligned in a predetermined orientation for proper vision.

The frame assembly 10 also includes an inner frame 28 for holding a second pair of lenses in a predetermined position with respect to the lenses held in frame 12. The frame 28 is also of a type well known in the art and preferably comprises a wire frame having low mass so that the combined size of frames 12 and 28 is maintained relatively small. As can be seen in the view of FIG. 1, frame 12 is hinged to frame 28 by hinges 30 and 32 which allows the frame 12 to pivot as much as five millimeters with respect to frame 28. FIG. 3 shows the pivoted frames. As will become apparent from the discussion to follow, an important feature is the combination of a prism effect into the lenses so that the viewed image may be focused onto a particular area of a retina. In some patients, e.g., diabetic patients, that portion of a retina which is responsive to light may vary from day-to-day. By providing a slight adjustment of the relative positions of the frame 12 and 28, the position of the focused image may be varied. So long as the optical centers of the lenses are not affected, the image will not deteriorate. The inner frame 28 aslo includes nose pieces 34 and 36 for supporting the frame assembly 10 on the nose of a user in the well known manner.

One form of lens assembly is shown in the cross-sectional view of FIG. 4. The first or outer lens 38, that lens most distant from the eye 40 of the user, is of a positive power or positive optical characteristics and functions as an enlarging lens for the optical system. Such a lens will function to converge light rays received from an object 42 being viewed. In the preferred embodiment of the invention, this lens is formed with two convex surfaces, one at its front or outer side 44 and one at its back or inner side 46. Normally, for a positive lens, at least one surface of the lens must be convex. This lens is of sufficient size to effect its appropriate imaging function with its edge thickness being between about 0.5 millimeters and about 1.5 millimeters. Its inner side 46, that side closer to the eye of a user, preferably has a convex surface with a curvature of between about 2.13 diopter and about 4.76 diopter. A diopter is a unit of measurement of the refractive power of a lens equal to the reciprocal of its focal length measured in meters.

The second lens 48 of each optical system is of a negative power or negative optical characteristics and functions to reduce the image being viewed by diverging received light rays. This lens is preferably formed with two concave surfaces, one at its front or outer side 52 and one at its back or inner side 54. This lens preferably is of slightly larger diameter than lens 38 and has a center thickness of between about 1.2 millimeters and about 1.6 millimeters. The curvature of the first or outer side 52 of the second lens 48 preferably is between 4.29 diopter and 6.72 diopter.

The various lenses of the optical assemblies are preferably formed of glass or plastic of commercial lens quality and performance characteristics. Such materials are well known in the art, readily available in the market place and are fully described in the published literature.

The space 50 between the lenses along their optical axes 62 is normally between about 1.2 millimeters and 1.5 millimeters. The image-bearing light rays from an object being viewed are converged by the first lens 38, pass through the space 50, and are then diverged by passage through the second lens 48. The lens assembly, i.e., lenses 38 and 48, is designed and configured so as to produce an essentially one-to-one magnification which is preferred for eye glass usage. The space between the lenses 38 and 40 can be varied by the hinged frame assembly. In the bifocal area, the lenses can be moved to be as much as 7.5 millimeters apart. This additional separation can provide additional magnification in the bifocal area.

FIG. 4 also illustrates, added to the first lens 38, preferably on its outer or front surface 58, a bifocal lens 64. The bifocal lens is designed to effect a proper prescription and is located or disposed at the bottom of the front of the first lens adjacent the front of the rim. It constitutes a minor extent of the lens surface. This bifocal lens functions in a normal fashion as a standard bifocal lens permitting a user to read at close distances by viewing through the major extent of the lenses. Bifocals, as well as their methods of fabrication and use, are well known in the art. In addition to the normal bifocal function, eye glasses with bifocal lenses constructed in accordance with the present invention provide the light concentration function for people with low vision problems as described herein above.

Referring to FIG. 5, there is shown a front view of the inner lens 48. The outer line 74 represents the beginning edge of the outer concave surface 52. The inner line 76 represents the beginning edge of the inner concave surface 54. The positions of the lines 76 and 74 have been exaggerated for clarity. The relative difference in diameter of the outer and inner concave surfaces 52 and 54 defines a prism or circular refractive interface 78 which is actually a reflection of the surface 80 (see Fig. 4). The prism surface 78 enhances the light gathering ability of lens 48 and brightens images directed to the eye. By shifting the relative position of the surfaces 52 and 54 and varying the relative size, the image can be focused on areas of the retinal membrane 70 which are active or undamaged, i.e., the optical center of the lens 48 can be shifted to change the focal area on the eye. Preferably, the diameter of the inner concave surface 54 is maintained constant while the diameter of the outer concave surface 52 may be varied as required. Typically, the surface 54 will have a diameter of 35 millimeters while the diameter of surface 52 may vary between 38 and 50 millimeters. Variation of one millimeter in the size of the defined prism surface will shift the image by five degrees angularly with respect to the optical axis of the lenses. From the above, it will be appreciated that the lens system provides two separate and distinct functions. The first function is to direct an image onto an optically responsive portion of a user's retina. The second function is to act as a light gatherer to increase the amount of light directed toward the retina. It is believed that the light gathering function may be of more significance than the image directing function. For example, in some tests for visual acuity in which the patient is placed in a darkened room and directed to observe an image on a screen, it has been found that very little improved vision could be measured. However, the same patient in a well lighted room experienced a significant improvement in visual acuity. This light gathering function is believed due to the prism surface 78 which can be shown to be effective in directing light toward the retina. Note that it is not believed that the prism surface 78 redirects the viewed image but only that it increases the amount of light entering the eye and therefore makes the eye more sensitive to image information.

It is also noted that the prism ring or circular refractive interface 78 may have different widths and the angle of the surface 80 may vary as well as a function of the diameter and radius of curvature of the outer concave surface 52 in relation to the diameter and radius of curvature of the inner concave surface 54. As the angle of surface 80 varies, the angle at which light is reflected toward the optical center of the lens 48 will vary along with the amount of light (illumination) projected onto the retina. Other variations such as lens material, or concentricity of the outer radius of curvature in relation to the inner radius of curvature, will also affect the focal area of light refracted by the prism ring. Each of these elements may be controlled in order to direct illumination onto the most functional parts of the retina.

In fitting the lenses, a standard first or magnifying lens 38, as well as a standard second or diverging lens 48, are designed to the imaging needs of the user. A detailed description of apparatus and method for selecting lenses is given in U.S. Patent Application Serial Number 226,791 filed August 1, 1988. The first lens can be moved forward and backward during the fitting process to effectively focus the image to the needs of the patient in a a manner similar to a zoom lens on a camera. When the image being viewed is being focused to a particular patient's needs and objects can be viewed clearly, this information is used to prepare a lens assembly. By computing the distance from the first lens 38 to the second lens 48, times the power of the first lens, with correct power and lens curvature, both lenses can then be positioned in a frame assembly such as that shown in FIGS. 1-3. It is understood that for some conditions the optical axes of the patient's lenses may have to be slightly offset from the optical axis of the eye of the patient for proper fitting. Such may occur when the light responsive portion of a patient's retina is off the optical axis of the eye.

Although the invention has been described in its preferred forms or embodiments with a certain degree of particularity, it is understood that the present disclosure of the preferred forms has been made only by way of example and that numerous changes in the details of construction, fabrication and use, including the combination and arrangement of parts and steps, may be resorted to without departing from the invention.

## Claims

1. A method of fabricating eye glasses for focusing and concentrating light viewed from an object source (42) onto an optically responsive portion of a partially degenerated macular retinal membrane (70) disposed along the inner surface of an eye (40), the eye glasses including a positive power lens (38), and a negative power lens (48) having an optical center and a prism portion (78, 80), the method comprising the steps of:
forming the positive lens (38);
forming the negative lens (48), including predeterminately locating the optical center of the negative lens therein and integrally providing the prism portion (78, 80) generally in circumferential relation about the negative lens for passing ambient light entering the negative lens toward the retinal membrane;
assembling the positive and negative lenses (38, 48) in a frame (10) in predetermined positions with respect to each other, so that, in use, the negative lens is positioned between the positive lens and the eye; and
disposing the optical center in a preselected position during the assembling step, thereby to control image direction for focusing an image on the optically responsive portion of the retinal membrane when converging light passes through the negative lens from the object source.

2. The method according to claim 1, wherein the frame (10) has relatively adjustable lens supports (12, 28, 30, 32), the method further including the step of selectively adjusting the relative position of the lenses for focusing the image on different selected areas of the retinal membrane.

3. Eye glasses for enhancing visual acuity of a person suffering from vision deterioration due to loss of light response in portions of the person's retina (70), comprising:
an outer positive power lens (38) for converging light received from an object (42), said outer lens being supported by a frame (10);
an inner negative power lens (48) spaced apart from said outer lens and supported by said frame so that, in use, said inner lens is positioned between said outer lens and the person's retina and cooperatively functions with said outer lens to direct the light from an object (42) onto an optically responsive portion of the person's retina (70); and
a prism ring (78, 80) circumscribing said inner lens and oriented to re-direct ambient light onto the person's retina.

4. The eye glasses according to claim 3, wherein said prism ring (78, 80) is positioned about the inner surface (54, 80) of said inner lens (48).

5. The eye glasses according to claim 3, wherein said inner lens (48) is a double concave lens with the radius of a concave portion (52) of the outer surface of the lens being larger than the radius of a concave portion (54) of the inner surface, the difference in radii defining the prism ring (78, 80).

6. The eye glasses according to claim 5, wherein said inner lens (48) includes an angularly cut outer circumscribing surface (80) between said inner surface concave portion (54) and a radially outer edge of said inner lens, said angularly cut surface (80) forming a circular refractive surface to refract light toward the retina (70).

7. A pair of spectacles for focusing and concentrating light received from an object (42) onto an optically responsive portion of a partially degenerated macular retinal membrane (70) which is positioned along the inner surface of an eye (40), said spectacles comprising:
an outer positive power lens (38) for converging light received from the object (42), said outer lens being supported by a frame (10);
an inner negative power lens (48) spaced apart from said outer lens and supported by said frame so that, in use, said inner lens is positioned between said outer lens and the eye and controls image direction to focus an image upon the optically responsive portion of the retinal membrane, said inner lens having an outer concave surface (52) facing said outer lens (38) and an inner concave surface (54) facing away from said outer lens (38), the diameter of the inner concave surface (54) being smaller than the diameter of the outer concave surface (52); and
a circular ring prism (78, 80) circumscribing said inner lens (48) and oriented to refract light entering said inner lens toward an optical center of said inner lens.

8. The pair of spectacles according to claim 7, wherein said outer lens (38) has two convex surfaces (44, 46).

9. The pair of spectacles according to claim 7 or 8, wherein the space between said lenses (38, 48) is between about 1.2 to 1.5mm.

10. The pair of spectacles according to any of claims 7 to 9, wherein said outer lens (38) has an edge thickness of between about 0.5 to 1.5mm.

11. The pair of spectacles according to any of claims 7 to 10, wherein said inner lens (48) has a center thickness of between about 1.2 to 1.6mm.

12. The pair of spectacles according to any of claims 7 to 11, further comprising a bifocal lens (64) formed as part of said outer lens (38).

13. The pair of spectacles according to any of claims 7 to 12, wherein the space between said inner and outer lenses (38, 48) along their optical axes (62) is between about 1.2 to 1.5mm.

14. The pair of spectacles according to any of claims 7 to 13, wherein said frame (10) includes a first frame member (12) for supporting said outer lens (38) and a second frame member (28) for supporting said inner lens (48), said first and second frame members (12, 28) being pivotable relative to each other via pivot means (30, 32).

## Patentansprüche

1. Verfahren zum Herstellen von Billengläsern für die Fokussierung und Konzentrierung von Licht, welches von einer Objektquelle (42) auf einen optisch ansprechbaren Teil einer teilweise degenerierten, fleckigen Netzhaut (70) fällt, die auf der Innenfläche eines Auges (40) angeordnet ist, wobei die Brillengläser eine Linse (38) positiver Brechkraft und eine Linse (48) negativer Brechkraft einschließen, welche ein optisches Zentrum und einen Prismenbereich (78, 80) hat, wobei das Verfahren die Schritte aufweist:
Ausbilden der positiven Linse (38),
Ausbilden der negativen Line (48), einschließlich der vorherbestimmten Anordnung des optischen Zentrums der negativen Linse und einschließlich des einstückigen Bereitstellens des Prismenbereiches (78, 80) im allgemeinen entlang des Umfanges der negativen Linse, um Licht aus der Umgebung, welches in die negative Linse eintritt, in Richtung der Netzhaut zu leiten,
Montieren der positiven und negativen Linsen (38, 48) in einem Rahmen (10) in vorbestimmten Positionen relativ zueinander, so daß bei Gebrauch die negative Linse zwischen der positiven Linse und dem Auge liegt, und
Anordnen des optischen Zentrums in einer vorgewählten Position während des Montageschrittes, um dadurch die Bildrichtung so zu steuern, daß ein Bild auf den optisch ansprechenden Teil der Netzhaut fokussiert wird, wenn konvergierendes Licht von der Objektquelle her durch die negative Linse hindurchtritt.

2. Verfahren nach Anspruch 1, wobei der Rahmen (10) relativ zueinander einstellbare Linsenträger (12, 28, 30, 32) hat, wobei das Verfahren weiterhin den Schritt einschließt, daß die relative Position der Linsen nach Wahl eingestellt wird, um das Bild auf verschiedene ausgewählte Bereiche der Netzhaut zu fokussieren.

3. Brillengläser für die Verbesserung der Sehschärfe einer Person, die an einer Sehbeeinträchtigung leidet aufgrund des Verlustes der Ansprechfähigkeit auf Licht in Bereichen ihrer Netzhaut (70), mit:
einer äußeren Linse (38) positiver Brechkraft für das Bündeln von Licht, welches von einem Objekt (42) empfangen wird, wobei die äußere Linse in einem Rahmen (10) gehaltert wird,
einer Linse (48) negativer Brechkraft, die von der äußeren Linse beabstandet und derart in dem Rahmen gehaltert ist, daß sie bei Gebrauch zwischen der äußeren Linse und der Netzhaut der betreffenden Person angeordnet ist und funktionell so mit der äußeren Linse zusammenwirkt, daß sie Licht von einem Gegenstand (42) auf einen optisch ansprechenden Teil der Netzhaut (70) der betreffenden Person lenkt, und
einem Prismenring (78, 80), welcher die innere Linse umgibt und so ausgerichtet ist, daß er Licht aus der Umgebung auf die Netzhaut der Person umlenkt.

4. Brillengläser nach Anspruch 3, wobei der Prismenring (78, 80) um die Innenfläche (54, 80) der inneren Linse (48) herum angeordnet ist.

5. Brillengläser nach Anspruch 3, wobei die innere Linse (48) eine doppelt konkave Linse ist, wobei der Radius des konkaven Bereiches (52) der äußeren Fläche der Linse größer ist als der Radius eines konkaven Abschnittes (54) der Innenfläche, wobei die Differenz der Radien den Prismenring (78, 80) definiert.

6. Brillengläser nach Anspruch 5, wobei die innere Linse (48) eine abgewinkelte äußere Umfangsfläche (80) zwischen dem inneren konkaven Abschnitt (54) und einer radial äußeren Kante der inneren Linse aufweist, wobei die abgewinkelte Fläche (80) eine entlang eines Kreises umlaufende, lichtbrechende Fläche bildet, um Licht in Richtung der Netzhaut (70) zu brechen.

7. Brille für die Fokussierung und Konzentrierung von Licht, welches von einem Gegenstand auf einem optisch ansprechenden Teil einer teilweise degenerierten, fleckigen (makularen) Netzhaut (70) empfangen wird, die entlang der Innenfläche eines Auges (40) verläuft, wobei die Brille aufweist:
eine äußere Linse (38) positiver Brechkraft für das Bündeln von Licht, welches von dem Gegenstand (42) empfangen wird, wobei die äußere Linse von einem Rahmen (10) gehaltert wird,
eine innere Linse (48) negativer Brechkraft, welche von der äußeren Linse beabstandet und derart von dem Rahmen gehaltert wird, daß sie bei Gebrauch zwischen der äußeren Linse und dem Auge angeordnet ist und die Bild- bzw. Abbildungsrichtung so steuert, daß ein Bild auf den optisch ansprechenden Teil der Netzhaut fokussiert wird, wobei die innere Linse eine äußere konkave Oberfläche (52) hat, die der äußeren Linse (38) zugewandt ist, sowie eine innere konkave Fläche (54) hat, die von der äußeren Linse abgewandt ist, wobei der Durchmesser der inneren konkaven Fläche (54) kleiner als der Durchmesser der äußeren konkaven Fläche (52) ist, und
ein kreisförmig umlaufendes Ringprisma (78, 80), welches um die innere Linse (48) herumlaufend angeordnet und so ausgerichtet ist, daß es Licht, welches in die innere Linse eintritt, in Richtung eines optischen Zentrums der inneren Linse bricht.

8. Brille nach Anspruch 7, wobei die äußere Linse (38) zwei konvexe Oberflächen (44, 46) aufweist.

9. Brille nach Anspruch 7 oder 8, wobei der Abstand zwischen den Linsen (38, 48) zwischen etwa 1,2 bis 1,5 mm liegt.

10. Brille nach einem der Ansprüche 7 bis 9, wobei die äußere Linse (38) eine Randdicke zwischen etwa 0,5 bis 1,5 mm hat.

11. Brille nach einem der Ansprüche 7 bis 10, wobei die innere Linse eine Dicke im Zentrum zwischen etwa 1,2 bis 1,6 mm hat.

12. Brille nach einem der Ansprüche 7 bis 11, welche weiterhin eine Bifokallinse (64) aufweist, die als Teil der äußeren Linse (38) ausgebildet ist.

13. Brille nach einem der Ansprüche 7 bis 12, wobei der Abstand zwischen der inneren und äußeren Linse (38, 48) entlang ihrer optischen Achsen (62) zwischen etwa 1,2 und 1,5 mm beträgt.

14. Brille nach einem der Ansprüche 7 bis 13, wobei der Rahmen (10) ein erstes Rahmenteil (12) aufweist, um die äußere Linse (38) zu haltern, und ein zweites Rahmenteil (28) aufweist, um die innere Linse (48) zu haltern, wobei die ersten und zweiten Rahmenteile (12, 28) über eine Drehgelenkeinrichtung (30, 32) relativ zueinander verschwenkbar sind.

## Revendications

1. Procédé de fabrication de lunettes pour focaliser et concentrer la lumière vue depuis une source objet (42) sur une portion sensible optiquement d'une membrane rétinienne à dégénérescence maculaire partielle (70) située le long de la surface interne d'un oeil (40), les lunettes comprenant une lentille convergente (38) et une lente divergente (48) comportant un centre optique et une portion de prisme (78, 80), le procédé comprenant les phases consistant à :
former la lentille convergente (38);
former la lentille divergente (48), y compris en situant de manière prédéterminée le centre optique de la lentille divergente en son sein et en situant de manière intégrante la portion de prisme (78, 80) généralement à la circonférence de la lentille divergente pour le passage de la lumière ambiante traversant la lentille divergente vers la membrane rétinienne;
assembler les lentilles convergente et divergente (38, 48) dans une monture (10) en des positions prédéterminées l'une par rapport à l'autre, de manière que, à l'utilisation, la lentille divergente soit située entre la lentille convergente et l'oeil; et
disposer le centre optique en une position présélectionnée au cours de la phase d'assemblage, afin de commander la direction d'image pour focaliser une image sur la portion sensible optiquement de la membrane rétinienne lorsque la lumière convergente traverse la lentille divergente depuis la source objet.

2. Procédé selon la revendication 1, dans lequel la monture (10) comporte des supports (12, 28, 30, 32) de lentilles réglables les uns par rapport aux autres, le procédé comprenant la phase de réglage sélectif des lentilles pour focaliser l'image sur différentes zones sélectionnées de la membrane rétinienne.

3. Lunettes pour améliorer l'acuité visuelle d'une personne souffrant de troubles de la vue dus à une perte de sensibilité à la lumière dans des portions de la rétine (70), comprenant :
une lentille convergente externe (38) pour faire converger la lumière reçue depuis un objet (42), ladite lentille externe étant supportée par une monture (10);
une lentille divergente interne (48) espacée de ladite lentille externe et supportée par ladite monture de manière que, à l'utilisation, ladite lentille interne soit positionnée entre ladite lentille externe et la rétine et coopère avec ladite lentille externe pour diriger la lumière depuis un objet (42) sur une portion sensible optiquement de la rétine; et
un prisme annulaire (78, 80) entourant ladite lentille interne et orienté de manière à rediriger la lumière ambiante sur la rétine.

4. Lunettes selon la revendication 3, dans lesquelles ledit prisme annulaire (78, 80) est positionné à la surface interne (54, 80) de ladite lentille interne (48).

5. Lunettes selon la revendication 3, dans lesquelles ladite lentille interne (48) est une lentille concave double avec le rayon d'une portion concave (52) de la surface externe de la lentille étant plus grand que le rayon d'une portion concave (54) de la surface interne, la différence de rayon définissant le prisme annulaire (78, 80).

6. Lunettes selon la revendication 5, dans lesquelles ladite lentille interne (48) comprend une surface périphérique externe coupée obliquement (80) entre ladite portion concave (54) de surface interne et un bord externe radialement de ladite lentille interne, ladite surface coupée obliquement (80) formant une surface de réfraction circulaire pour réfracter la lumière vers la rétine (70).

7. Paire de lunettes pour focaliser et concentrer la lumière reçue d'un objet (42) sur une portion sensible optiquement d'une membrane rétinienne à dégénérescence maculaire partielle (70) qui est située le long de la surface interne d'un oeil (40), lesdites lunettes comprenant :
une lentille convergente externe (38) pour faire converger la lumière reçue de l'objet (42), ladite lentille externe étant supportée par une monture (10);
une lentille divergente interne (48) espacée de ladite lentille externe et supportée par ladite monture de manière que, à l'utilisation, ladite lentille interne soit positionnée entre ladite lentille externe et l'oeil et commande la direction d'image pour focaliser une image sur la portion sensible optiquement de la membrane rétinienne, ladite lentille interne comportant une surface concave externe (52) donnant sur ladite lentille externe (38) et une surface concave interne (54) donnant loin de ladite lentille externe (38), le diamètre de la surface concave interne (54) étant plus petit que le diamètre de la surface concave externe (52); et
un prisme annulaire circulaire (78, 80) entourant ladite lentille interne (48) et orienté de manière à réfracter la lumière traversant ladite lentille interne vers un centre optique de ladite lentille interne.

8. Paire de lunettes selon la revendication 7, dans laquelle ladite lentille externe (38) comporte deux surfaces convexes (44, 46).

9. Paire de lunettes selon la revendication 7 ou 8, dans laquelle l'espace entre lesdites lentilles (38, 48) est compris entre 1,2 et 1,5 mm.

10. Paire de lunettes selon l'une quelconque des revendications 7 à 9, dans laquelle ladite lentille externe (38) a une épaisseur de bord comprise entre 0,5 et 1,5 mm.

11. Paire de lunettes selon l'une quelconque des revendications 7 à 10, dans laquelle ladite lentille interne (48) a une épaisseur centrale comprise entre 1,2 et 1,6 mm.

12. Paire de lunettes selon l'une quelconque des revendications 7 à 11, comprenant en outre une lentille bifocale (64) faisant partie de ladite lentille externe (38).

13. Paire de lunettes selon l'une quelconque des revendications 7 à 12, dans laquelle l'espace entre lesdites lentilles externe et interne (38, 48) le long de leur axe optique (62) est compris entre 1,2 et 1,5 mm.

14. Paire de lunettes selon l'une quelconque des revendications 7 à 13, dans laquelle ladite monture (10) comprend un premier élément de support (12) pour supporter ladite lentille externe (38) et un second élément de support (28) pour supporter ladite lentille interne (48), lesdits premier et second éléments de support (12, 28) pouvant pivoter l'un par rapport à l'autre via des pivots (30, 32).
